# EUROPEAN PATENT APPLICATION

(11) **EP 4 462 341 A1**
(43) Date of publication of application: **13.11.2024**
(21) Application number: 23315198.4
(22) Date of filing: 12.05.2023
(51) Int. Cl.: G06Q 40/02

(54) **METHOD AND SYSTEM FOR ACCOUNT MIGRATION**

(71) Applicant: Vocalink Limited, London EC4R 3AB (GB)
(72) Inventor: Batista Inoa, Genices, New York, NY 10036 (US); Blanco Gutierrez, German, 78100 Saint-Germain-en-Laye, Yvelines (FR); Rayment, Emma, Hemel Hempstead, Hertfordshire HP1 1TZ (GB); Chandrasekhar, Arundhati, Stamford, CT (US)
(74) Representative: Murgitroyd & Company

(57) **Abstract**

A method for migrating an account of a Client (A) with a current Financial Institution (30) to a new Financial Institution (40), wherein both the current Financial Institution (30) and the new Financial Institution (40) are connected to a Bill Pay Platform (10) for receiving and processing Requests For Payment (RFPs) associated with outstanding bills issued by Billers (20, 21, 22) and intended for Clients (A, B) of said Financial Institutions (30, 40), said method comprising:
hosting (101) on the Bill Pay Platform (10) bill data of a Client (A) relating to the processing of RFPs intended for the Client (A),
linking (102) the bill data of the Client (A) to a current Financial Institution (30) to allow routing of RFPs intended for the Client (A) to said Financial Institution (30),
sending (103), by the Client (A) to a new Financial Institution (40), a request for taking over the responsibility for the processing of RFPs intended for the Client (A) from the current Financial Institution (30),
receiving (104), by the new Financial Institution (40), the request from Client (A) to take over responsibility for the processing of RFPs intended for the Client (A) from the current Financial Institution (30),
forwarding (105), by the new Financial Institution (40) of the request to take over the responsibility for the processing of the RFPs intended for the Client (A) to the Bill Pay Platform (10),
receiving (106), by the Bill Pay platform (10), the request from the new Financial Institution (40) to take over the responsibility for the processing of RFPs intended for the Client (A) in place of current financial Institution (30), and
linking (107), by the Bill Pay Platform (10), the bill data of the Client (A) to the new Financial Institution (40) to allow routing of RFPs intended for the Client (A) to said new Financial Institution (40).

## Description

### Field of the invention

The present disclosure relates to a method and a system for processing account migration between a first and second financial institution.

### Background of the invention

In general, the migration of an account of a Client from a current Financial Institution, like a bank, to a new Financial Institution is a time consuming process. Moreover, the migration may be a source of errors which endanger proper functioning of the new account at the new Financial Institution. The reason for this is that a Client will have provided to his current Financial Institution a variety of detailed instructions relating to the handling of his financial transactions, in particular bill payment related transactions. The amount of instructions may be important, certainly, if the Client has a relationship with his current Financial Institution since a long time.

The fear for possible complications and problems related to the migrating an account may be a reason for a Client to keep his current account with his current Financial Institution, despite the fact that the Client would have preferred to open a new account with a new Financial Institution.

### Objects of the invention

Objects and aspects of the present disclosure seek to provide a streamlined process to allow clients of a bank to migrate their account and in particular to migrate bill payment instructions related to said account from a current to a new Financial Institution.

### Summary of the invention

According to a first aspect the disclosure relates to a method for migrating an account of a Client with a current Financial Institution to a new Financial Institution, wherein both the current Financial Institution and the new Financial Institution are connected to a Bill Pay Platform for receiving and processing Requests For Payment (RFPs) associated with outstanding bills issued by Billers and intended for Clients of said Financial Institutions, said method comprising:
hosting on the Bill Pay Platform bill data of a Client relating to the processing of RFPs intended for the Client, the bill data being linked to the current Financial Institution to allow routing of RFPs intended for the Client to said Financial Institution,
sending, by the Client to a new Financial Institution, a request for taking over the responsibility for the processing of RFPs intended for the Client from the current Financial Institution,
receiving, by the new Financial Institution, the request from Client to take over responsibility for the processing of RFPs intended for the Client from the current Financial Institution,
forwarding, by the new Financial Institution of the request to take over the responsibility for the processing of the RFPs intended for the Client to the Bill Pay Platform,
receiving, by the Bill Pay platform, the request from the new Financial Institution to take over the responsibility for the processing of RFPs intended for the Client in place of current financial Institution, and
linking, by the Bill Pay Platform, the bill data of the Client to the new Financial Institution to allow routing of RFPs intended for the Client to said new Financial Institution.

According to a preferred embodiment, the step of forwarding, by the new Financial Institution, of the request to take over the responsibility for the processing of the RFPs intended for Client to the Bill Pay platform further comprises:
sending, by the new Financial Institution, proxy data of the Client to the Bill Pay Platform.

According to a preferred embodiment, the method further comprises:
receiving, by the Bill Pay platform, the request from the new Financial Institution to take over the responsibility for the processing of the RFPs intended for the Client and proxy data relating to the Client;
using the proxy data of the Client to retrieve corresponding identification data of the Client in a Payer Alias Directory, and
linking, by the Bill Pay platform, the bill data of the Client to the new Financial Institution to allow routing of RFPs intended for the Client to said new Financial Institution only if the corresponding identification data of the Client are retrieved in the Payer Alias Directory.

According to a preferred embodiment, the method further comprises:
sending, by the Bill Pay platform, an error message to the New Financial Institution if the corresponding identification data of the Client are not retrieved in the Payer Alias Directory.

According to a preferred embodiment, the step of forwarding, by the new Financial Institution, of the request to take over the responsibility for the processing of RFPs intended for the Client to the Bill Pay platform further comprises:
sending, by the new Financial Institution, a confirmation to the Client that the request has been produced and is currently being processed.

According to a preferred embodiment, the method further comprises,
sending, by the Bill Pay Platform of a confirmation to the New Financial Institution, of the linking of the bill data of the Client to the new Financial Institution and
forwarding, by the new Financial Institution, of the confirmation to the Client.

According to a preferred embodiment, the method further comprises:
requesting by the Client, prior to the step of sending a request to the new Financial Institution to take over the responsibility for the processing of RFPs intended for the Client, the new Financial Institution to open an account for the Client.

According to a preferred embodiment, the method further comprises:
sending, by new Financial Institution, a request to the Client to provide the details of a current Financial Institution.

According to a preferred embodiment, the method further comprises:
sending, by the new Financial Institution, a request to the Client to install a banking application on a personal electronic device, to allow the Client to communicate with new Financial Institution by means of said banking application.

According to a preferred embodiment, the method further comprises:
installing, by the Client, on a personal electronic device a banking application, to allow the Client to communicate with new Financial Institution by means of said banking application.

According to a further aspect, the disclosure relates to a data processing system comprising a processor configured to perform the method according to the disclosure.

According to a further aspect, the disclosure relates to a computer program product comprising instructions, which, when the program is executed by a computer, cause the computer to carry out the method according to the disclosure.

According to a further aspect, the disclosure relates to a computer-readable storage medium comprising instructions which, when executed by a computer, cause the computer to carry out the method according to the disclosure.

### Brief description of the drawings

Reference will now be made, by way of example, to the accompanying drawings, in which:
Figure 1 is a schematic diagram of a system for processing a method for migrating an account from a first financial institution to a second financial institution, in accordance with an embodiment of the disclosure, given by way of example; and
Figure 2 is a flow chart diagram showing the steps of the method for migrating an account from a first financial institution to a second financial institution, in accordance with an embodiment of the disclosure, given by way of example.

### Detailed description

The term "account" as used in this disclosure, refers to any type of account that an individual client can have at a Financial Institution, like a bank. The term refers to an account in the broadest possible sense and may relate to data defining the relationship of the client with the financial institution. It is noted that in the context of this description, the term "account" specifically includes any reference to data relating to bill payments.

The term "bill data" refers to any data relating to the processing of Requests for Payment (RFPs) to allow the payment of bills related to said RFPs.

The term "Financial Institution" as used in this disclosure, refers in the broadest possible sense to any financial organisation, like a bank, that is able to take responsibility for financial transactions on behalf of individual clients.

The term "financial transaction" is used to refer in the broadest possible sense to any action taken by a financial institution on behalf of a client, like the transfer of money to effect the payment of an outstanding bill.

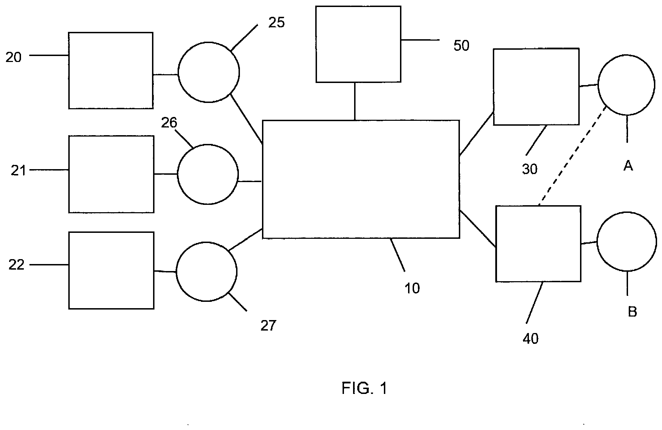

Figure 1 is a schematic representation of an infrastructure 100 for executing a method for processing a request for the migration of an account from a current Financial Institution to a new Financial Institution. The core of the infrastructure comprises a Bill Pay platform 10. The Bill Pay Platform 10 operates as an intermediary unit between Billers 20, 21, 22, being issuers of bills, and individual payers A and B, being recipient of said bills. In the Example of Figure 1, payers A and B are Clients of respectively Financial Institution 30 and 40. The Bill Pay platform 10 serves as a central portal through which bills can be forwarded from issuers of bills, the Billers 20, 21, 22, to recipients of bills, the Clients A, B.

The individual payers A, B, are linked or connected to the Bill Pay Platform 10 via their respective Financial Institutions 30, 40. These Financial Institutions 30, 40 are, for instance, banks. Figure 1 shows for the purposes of convenience only a first Financial Institution 30 and second Financial Institution 40. It will be understood that the number of financial institutions that can connect to and use the Bill Pay platform 10 can be limitless.

For clarity purposes, Figure 1 only shows three issuers of a bill, or Billers, 20, 21, 22. It will be understood that the number of Billers 20, 21, 22 that can connect to and use the Bill Pay platform 10 can be limitless.

The Bill Pay Platform 10 may be, for instance, the Mastercard ^{®} Bill Pay Exchange Platform also referred to the acronym BPX.

Biller 20 is connected to the Bill Pay Platform 10 via his Biller service provider 25, which interfaces the Biller 20, and the Bill Pay platform 10. The Billers 21 and 22 are connected to the Bill Pay Platform 10 via their respective Biller service providers 26 and 27, which interface the Billers 21 and 22, and the Bill Pay platform 10.

For example, Biller 20 can issue bills for individual payers A, B and present those bills to the Bill Pay Platform 10. Subsequently, the Bill Platform 10 manages the forwarding of the bills to the Financial Institutions 30, 40 of the individual payers A, B. In the same manner, Billers 21 and 22 can issue bills and present those bills to the Bill Pay Platform 10, which manages the forwarding of the bills to the Financial Institutions 30, 40 of the individual payers A, B.

The first financial institution 30 is associated with a first payer, i.e. Client A. The second financial institution 40 is associated with a second payer, i.e. Client B.

According to the present disclosure, the first Client A is a customer of the Bill Pay platform 10 via his Financial Institution 30. The second Client B is also a customer of the Bill Pay platform 10 via the Financial Institution 40.

It will be clear that each of the Financial Institutions 30, 40 will have a large number of clients. For the purposes of convenience, for each of the Financial Institutions, only a single client, respectively Client A and Client B, is represented.

The first payer, Client A, uses communication means that are provided by the Financial Institution 30 in order to communicate with said Financial Institution 30.

Typically, Client A may install a banking application on one or more personal electronic devices. These personal electronic devices may include a mobile device, such as a smart phone, or a computer. The Client A may therefore use his personal electronic device to receive any type of data content from the Financial Institution 30 and send any type of data content to the Financial Institution 30.

In the same way as described with reference to the first Client A, the second Client B uses communication means that are provided by the Financial Institution 40 to communicate with said Financial Institution 40. Typically, second Client B may install a banking application on a personal electronic device (not shown) of said second Client B. This personal electronic device may be a mobile device, such as a smart phone, or a computer. The second Client B may use his personal electronic device to receive any type of data content from the Financial Institution 40 and send any type of data content to the Financial Institution 40.

As shown in Figure 1, the Bill Pay platform 10 is connected to a Payer Alias Directory 50. The Payer Alias Directory 50 stores data for identifying the customers of the Bill Pay platform 10, such as the first Client A of Financial Institution 30 and the second Client B of Financial Institution 40. Thus, when a Client A, B of any Financial Institution 30, 40 communicates with the Bill Pay platform 10 regarding the payment of a bill via their Financial Institution 30,40, simultaneously an alias or proxy data of said Client A, B are sent to the Bill Pay platform 10. Thus, the Bill Pay platform 10 can compare said alias or proxy data with the identification data stored in the Payer Alias Directory 50 in order to identify the Client.

As will be explained in more detail below, the system 100 of Figure 1 allows a Client A, B of a Financial Institution 30, 40 to migrate their account from their current Financial Institution to an alternative Financial Institution. In the example of Figure 1, the system 100 can be used, for instance, to migrate the current account of Client A with Financial Institution 30 in a streamlined manner to Financial Institution 40. The migration of Client A is schematically represented in Figure 1 by the dotted line between Client A and Financial Institution 40, to represent the new relationship between Client A and Financial Institution 40.

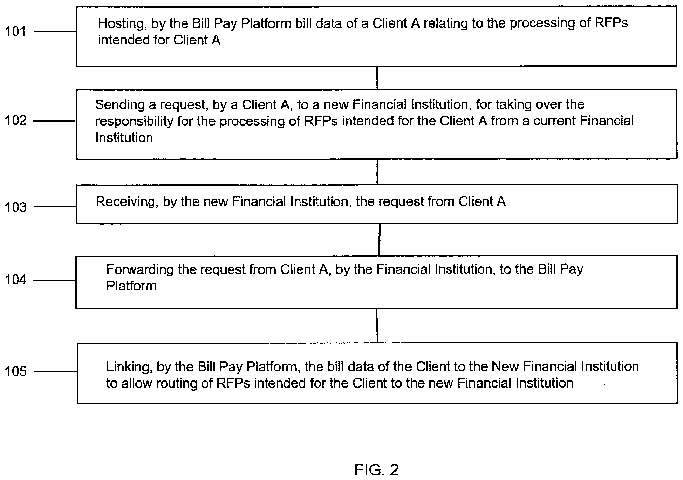

Figure 2 is a flow chart diagram showing the steps of processing a request for migration of an account by a client, for instance Client A, from a current Financial Institution, for instance Financial Institution 30, to a new Financial Institution, for instance Financial Institution 40, by applying the method of the present disclosure.

In a first step 101, the Bill Pay Platform 10 hosts bill data of Client A relating to the processing of RFPs intended for Client A. These data will be provided to the Bill Pay Platform 10 by the Financial Institution 30 on behalf of Client A and the data are in the databases of the Bill Pay Platform linked to Financial Institution 30 to allow routing of RFPs intended for the Client A to said Financial Institution 30.

In a second step 102 a request is sent, by a Client A, to the new Financial Institution 40, for taking over the responsibility for the processing of RFPs intended for the Client A from the current Financial Institution 30.

In a third step 103, the request from Client A is received by the new Financial Institution 40, and the request is forwarded, in a fourth step 104, by the new Financial Institution 40 to the Bill Pay Platform 10.

In a fifth step 105, the request from the new Financial Institution 40 is received by the Bill Pay Platform 10, which will link the bill data of the Client A to the new Financial Institution 40. This means that the bill data, available on the Bill Pay Platform 10 can now be used to allow routing of the RFPs via the new Financial Institution 40 to Client A, without the need to re-create these bill data.

As will be understood from the description above and the example below, the Bill Pay Platform 10 manages bill data on behalf of the Client, for instance Client A. In first instance, the Bill Pay Platform 10 will use the bill data for Client A in its communication with current Financial Institution 30. In case of migration of the account from current Financial Institution 30 to new Financial Institution 40, the Bill Pay Platform can continue to use the same bill data for client A as before, with the only exception that now the communication will be between the Bill Pay Platform 10 and the new Financial Institution 40. The Bill Pay Platform 10, for instance, stores and manages RFPs. The idea is that, post migration confirmation; the new Financial Institution 40 can retrieve from the Bill Pay Platform 40 databases any historical bills, and automatically have future bills routed to them. On their end of the communication, the Financial Institution 40 can store payment preferences against RFPs.

### Example

The Bill Pay Platform 10, shown in Figure 1, is set up to allow Clients A, B of Financial Institutions 30, 40 to make payments towards Requests For Payment (RFPs) issued by Billers 20, 21 and 22, wherein the RFPs relate to bills of said Billers 20, 21, 22.

The process of the payment of a bill is as follows:
Biller 20, for instance, a utility company, issues a bill for the utility costs for the time-period for Client A. Biller 20 sends a RFP relating to the bill to the Service Provider 25 of Biller 20. The Service Provider of Biller 20 forwards the RFP to the BPX.

The BPX receives the RFP from Biller 20 and forwards the RFP to Financial Institution 30. Financial Institution 30 informs Client A of the reception of the RFP.

To process the incoming RFP's, Client A will have a set of instructions agreed with his Financial Institution 30 for the payment of individual RFP's. That means that Client A will have agreed with Bank A in what manner each of the RFP's relating Client A should be processed.

Client A will, for instance, ask Financial Institution 30 to inform Client A of the reception of a first type of RFP's and to make the payment towards the RFP's without further instructions from Client A.

This first type of RFP's relate, for instance, to bills which have been identified by Client A as being essential.

This first type of RFP's may relate to bills for, for instance, health insurance, car insurance and monthly payments relating to a mortgage. Client A may request Financial Institution 30 to keep Client A informed about the payment of the RFP's of the first type, but will inform the Financial Institution 30 that no further instructions from Client A are needed before the actual payment of the RFP is processed.

Client A may ask his Financial Institution 30 to process a second type of RFP's in a slightly different manner. This second type of RFP's are, for instance, RFP's which have been identified by Client A as being important. This second type of RFP's relate, for instance, to bills issued by utility companies, which impose strict payment terms. Client A will not want to risk the termination of the service of the utility companies. Therefore, Client A can instruct Financial Institution 30 to highlight the reception of this second type of RFP's on receipt, thereby allowing Client A to note the reception of an RFP of which the payment is important. Client A could ask, for instance, his Financial Institution 30 to only pay this second type of RFP's after having received a payment instruction from Client A. This will allow Client A to review each RFP individually before agreeing on the payment thereof. In this manner, Client A can keep track of possible changes in, for instance, monthly costs relating to a specific utility company. These monthly cost may relate to the use of the telephone, the consumption of electricity or may relate to the monthly consumption of water.

Further, Client A may ask his Financial Institution 30 to process the reception of RFP's of a third type in yet another manner. For instance, Client A may ask his Financial Institution 30 to provide, a monthly overview of pending RFP's of this third type and not to make any payment against these RFP until further notice. This will allow Client A to review, on a set moment during the month, the list of pending RFP's and decide for each of the individual RFP's to agree on the payment of the RFP, to decide to postpone the payment of the RFP and / or to refuse the payment of the RFP.

In addition, Client A may identify a fourth category of RFP's, for which payment can be refused by Financial Institution 30 without the need to receive further instructions from Client A. This fourth type of RFP's may relate to bills which have been issued by service providers of which Client A does no longer desire to receive services. This fourth category of RFP's may also relate to associations of charities to which Client A has paid money in the past but which he has decided to no longer financially support.

It should be understood, that in addition to the mentioned types of RFP, Client A could certainly identify yet further types of RFP's which could be processed by Financial Institution 30, in yet another manner. For the purposes of convenience, the example is limited to the four mentioned types of RFP's,

The above-mentioned relationship between Client A and the variety of Billers 21, 22, 23 issuing RFP's of the first, second, third and fourth types, is stored in an adapted database which is owned by and managed by Financial Institution 30. Financial Institution 30 will manage and update this database to assure that the assembly of payment instructions for RFP's of the mentioned different types is always up to date.

The entirety of payment instructions stored and managed by Financial Institution 30, certainly if the instructions are supplemented by Client A over a number of years, may represent a relatively large quantity of data.

In case Client A would like to end the relationship with his current Financial Institution 30 and would like to open an account at an alternative Financial Institution 40, Client A is obliged to provide the same detailed payment instructions for the processing of the different types of RFP's to this new Financial Institution 40. The provision of the instructions to his new Financial Institution 40 is necessary to allow Client A to continue with the payment of different RFP's in a similar manner as before.

According to the present disclosure, the Bill Pay Platform 10 is set up to store and manage RFPs. That means that the Bill Pay Platform 10 stores data about the current processing of RFP's. According to the disclosure, after migration of the account the new Financial Institution 40 can retrieve historic data relating to the processing of RFPs and use this information for future processing of RFPs.

According to the disclosure the management of bill data by the Bill Pay Platform 10 can also relate to the fact that for certain payments like, for instance, recurring monthly payments, Client A may have had to sign specific authorisations to allow his former financial institution, Financial Institution 30, to process the RFP's. These signed authorisations will have formerly been received and stored by Financial Institution A, in an appropriate database for this purpose. In case a Client A terminates his relationship with Financial Institution 30 in favour of a new relationship with Financial Institution 40, the mentioned authorisations should be reproduced, resigned and entered in the database of the Financial Institution 40, to allow Financial Institution 40 to continue the related payment procedures. It will be understood that the reproduction and resigning of these authorisations is again a time consuming exercise which may generate costs, such as legal fees, and which is a process, which could be a source of unwanted errors in providing payment instructions to Financial Institution 40.

To avoid the above-mentioned problems relating to the migration of an account from a first Financial Institution 30 to a second Financial Institution 40, the Bill Pay Platform 10 can be used to store the mentioned authorisations to avoid possible administrative, legal and financial complications linked to account migration.

According to the present disclosure, Client A has an account with Financial Institution 30 A and Client A has agreed with his Financial Institution 30 a series of instructions relating to the processing of different types of RFP's.

If Client A wants to leave Financial Institution 30 leave Bank A and wants to transfer the responsibility of his financial affairs to Financial Institution 40, Client A should, prior to any migration processes, create a new account with Financial Institution 40.

Once this new account is created, Client A asks his new financial institution, Financial Institution 40, to take over responsibility for the processing of RFPs intended for Client A.

After the reception of this request, new Financial Institution 40 will inform, in a further step of the procedure, the Bill Pay Platform 10 of the intention of Client A to transfer responsibility for the processing of RFPs to new Financial Institution 40.

On the receipt of the request from new Financial Institution 40 to take over the responsibility for the processing of RFPs for Client A, the Bill Pay Platform 10 will update its databases to link the bill data stored for Client A to new Financial Institution 40 to allow processing of future RFPs.

In detail and with reference to Figures 1 and 2, the process of account migration according to the present disclosure is as follows:
- The Bill Pay Platform will collect and store bill data relating to the processing of RFP's intended for Client A. This set of data is build up and updated over time.
- In case Client A would like to migrate his account to a new Financial Institution 40, Client A contacts Financial Institution 40 to indicate that he would like to open an account with Financial Institution 40.
- Financial Institution 40 will confirm to Client A that the creation of a new account for Client A will be processed.
- In a further step Client A sends a request to new Financial Institution 40 to ask the new Financial Institution to take over the responsibility for the processing of RFP's intended for Client A.
- In a subsequent step, new Financial Institution 40 receives the request from Client A.
- After the reception of this request from Client A, Financial Institution 40 will forward the request to take responsibility for the processing of RFPs intended for Client A to the Bill Pay Platform 10. At the same time, the Financial Institution 40 will provide proxy data relating to the Client A to the Bill Pay Platform 10.
- The Bill Pay Platform 10 will receive the request from Financial Institution 40 relating the responsibility for the processing of RFPs for Client A.
- In first instance, the Bill Pay Platform 10 will check the identity of Client A by using the Proxy or Payer Alias Database 50, which is connected to the Bill Pay Platform 10. if the Bill Pay Platform 10 cannot identify Client A, the Bill Pay Platform 10 will inform Financial Institution 40 of this problem, for instance by sending an error message. Subsequently, Financial Institution 40 will inform Client A of the problem that occurred.
- In case the Bill Pay Platform 10 is able to confirm the identity of Client A, the Bill Pay Platform 10 will link the bill data of Client A, which it has stored and which were formally linked to Financial Institution 30, to the new Financial Institution 40.
- In the meantime, Financial Institution 40 will keep Client A informed of the process of the transfer of the account. Once the account migration, via the Bill Pay Platform 10, is completed, Financial Institution 40 will inform Client A of this completion.

According to an embodiment of the disclosure, at the end of the migration, the new Financial Institution 40 could ask Client A, for individual RFP payment instructions, to either confirm the exactitude of the instructions as stored by the Bill Pay Platform 10, to amend the instructions, or to make any further additions according to the preferences of Client A. Once this step of confirmation and / or correction of the bill data is fully completed, new Financial Institution 40 is fully set up to take responsibility for the payments of RFP's in the name of Client A.

The above-described transfer of data is facilitated by the fact that both the current Financial Institution 30 and new Financial Institution 40 use the same Bill Pay Platform 10 for bill payments for their Clients A, B. This means that both Financial Institution 30 and Financial Institution 40 are able to communicate with and exchange data with the BPX. In other words, the way in which Financial Institution 30 will generate, store and manage the data relating to Client A will be sufficiently similar to the way the same data are generated, stored and managed by Financial Institution 40 to allow new Financial Institution 40 to take responsibility of the processing of RFPs intended for Client A using the ball data as stored by the Bill Pay Platform.

The communication wherein Client A requests Financial Institution 40 to take responsibility for the processing of RFPs in place of Financial Institution 30 can, for instance, be managed by a banking application of Financial Institution 40, which is installed on an electronic device, owned by and managed by Client A. This electronic device is typically a smartphone or another similar mobile device or computer managed by Client A.

After having created a new bank account with Financial Institution 40, or as part of the process for obtaining an account with Financial Institution 40, Client A will install the relevant banking application of Financial Institution 40 on a selected electronic device to allow communication with Bank B by means of the application. As an option, Client A may receive an invitation from Financial Institution 40 tio install the application.

Financial Institution 40 will use the banking application to keep Client A informed about the process of the migration of the account from current Financial Institution 30 to new Financial Institution 40.

Once Financial Institution 40 has confirmed to Client A that the migration is completed, Client A can use the same banking application to review, possibly amend and / or update bill payment instructions. Once this step is completed, Client A can use the same application to indicate to Financial Institution 40 that the bill payment instructions have effectively been reviewed and completed by Client A.

The above-mentioned method and system will have as advantage that it is easier for Client A to change from his current Financial Institution 30 to the new Financial Institution 40 without taking the risk of disturbing his bill payment arrangements.

The above-mentioned method and system necessitate the cooperation of both Financial Institution 30 and Financial Institution 40 to allow the migration of an account. This cooperation is imposed by the Bill Pay Platform 10, which will negotiate, in the interest of both Clients A, B and Financial Institutions 30, 40, cooperation to the system by all stakeholders.

From the described example of Client A leaving Financial Institution 30 to join Financial Institution 40, it may appear that the method and the system according to the disclosure only create advantages for new Financial Institution 40 and only disadvantages for current Financial Institution 30. It should, however, be understood that over the long run, the method and system according to the present disclosure will have advantages for all Financial Institutions 30, 40 since the system will allow existing Clients to leave a current Financial Institution 30 to go to a new Financial Institution 40. Individual Financial Institutions 30, 40 may see current Clients leaving because of the method and the system of the disclosure, however they will also see new Clients join thanks to the advantages of the method and system according to the present disclosure.

## Claims

1. A method for migrating an account of a Client (A) with a current Financial Institution (30) to a new Financial Institution (40), wherein both the current Financial Institution (30) and the new Financial Institution (40) are connected to a Bill Pay Platform (10) for receiving and processing Requests For Payment (RFPs) associated with outstanding bills issued by Billers (20, 21, 22) and intended for Clients (A, B) of said Financial Institutions (30, 40), said method comprising:
hosting (101) on the Bill Pay Platform (10) bill data of a Client (A) relating to the processing of RFPs intended for the Client (A), the bill data being linked to the current Financial Institution (30) to allow routing of RFPs intended for the Client (A) to said Financial Institution (30),
sending (102), by the Client (A) to a new Financial Institution (40), a request for taking over the responsibility for the processing of RFPs intended for the Client (A) from the current Financial Institution (30),
receiving (103), by the new Financial Institution (40), the request from the Client (A) to take over responsibility for the processing of RFPs intended for the Client (A) from the current Financial Institution (30),
forwarding (104), by the new Financial Institution (40) of the request to take over the responsibility for the processing of the RFPs intended for the Client (A) to the Bill Pay Platform (10),
receiving (105), by the Bill Pay platform (10), the request from the new Financial Institution (40) to take over the responsibility for the processing of RFPs intended for the Client (A) in place of current financial Institution (30), and
linking (106), by the Bill Pay Platform (10), the bill data of the Client (A) to the new Financial Institution (40) to allow routing of RFPs intended for the Client (A) to said new Financial Institution (40).

2. The method of claim 1, wherein the step of forwarding (105), by the new Financial Institution (40), of the request to take over the responsibility for the processing of the RFPs intended for Client (A) to the Bill Pay platform (10) further comprises:
sending, by the new Financial Institution (40), proxy data of the Client (A) to the Bill Pay Platform (10).

3. The method of claim 2, wherein the method further comprises:
receiving, by the Bill Pay platform (10), the request from the new Financial Institution (40) to take over the responsibility for the processing of the RFPs intended for the Client (A) and proxy data relating to the Client (A);
using the proxy data of the Client (A) to retrieve corresponding identification data of the Client (A) in a Payer Alias Directory (50), and
linking (107), by the Bill Pay Platform (10), the bill data of the Client (A) to the new Financial Institution (40) to allow routing of RFPs intended for the Client (A) to said new Financial Institution (40) only if the corresponding identification data of the Client (A) are retrieved in the Payer Alias Directory (50).

4. The method of claim 3, wherein the method further comprises:
sending, by the Bill Pay platform (10), an error message to the New Financial Institution (40) if the corresponding identification data of the Client (A) are not retrieved in the Payer Alias Directory (50).

5. The method of claim 1, 2, 3 or 4, wherein the step of forwarding (105), by the new Financial Institution (40), of the request to take over the responsibility for the processing of RFPs intended for the Client (A) to the Bill Pay platform (10) further comprises:
sending, by the new Financial Institution (40), a confirmation to the Client (A) that the request has been produced and is currently being processed.

6. The method of any preceding claim, wherein the method further comprises,
sending, by the Bill Pay Platform (10) of a confirmation to the New Financial Institution (40), of the linking of the bill data of the Client (A) to the new Financial Institution (40) and
forwarding, by the new Financial Institution (40), of the confirmation to the Client (A).

7. The method of any preceding claim, further comprising:
requesting, by the Client (A), prior to the step of sending (101), by the Client (A), to the new Financial Institution (40) a request to take over the responsibility for the processing of RFPs intended for the Client (A), the new Financial Institution (40) to open an account for the Client (A).

8. The method of claim 7, further comprising:
sending, by new Financial Institution (40), a request to the Client (A) to provide the details of a current Financial Institution (30).

9. The method of any preceding claim, further comprising:
sending, by the new Financial Institution (40), a request to the Client (A) to install a banking application on a personal electronic device, to allow the Client (A) to communicate with new Financial Institution (40) by means of said banking application.

10. The method of any preceding claim, further comprising,
installing, by the Client (A), on a personal electronic device a banking application, to allow the Client (A) to communicate with new Financial Institution (40) by means of said banking application.

11. A data processing system comprising a processor configured to perform the method of any of claims 1 to 10.

12. A computer program product comprising instructions which, when the program is executed by a computer, cause the computer to carry out the method of any of claims 1 to 10.

13. A computer-readable storage medium comprising instructions which, when executed by a computer, cause the computer to carry out the method of any of claims 1 to 10.
